# EUROPÄISCHE PATENTSCHRIFT

(11) **EP 2 037 787 B1**
(45) Veröffentlichungstag und Bekanntmachung des Hinweises auf die Patenterteilung: **14.12.2011**
(21) Anmeldenummer: 07730154.7
(22) Anmeldetag: 14.06.2007
(51) Int. Cl.: A47J 43/08

(54) **KÜCHENGERÄTESATZ**
KITCHEN APPLIANCES SET
ENSEMBLE D'APPAREILS CULINAIRES

(30) Priorität: 30.06.2006 DE 102006030220
(43) Veröffentlichungstag der Anmeldung: 25.03.2009
(73) Patentinhaber: BSH Bosch und Siemens Hausgeräte GmbH, 81739 München (DE)
(72) Erfinder: GOLAVSEK, Samo, 3312 Prebold (SI); OGRIZEK, Darko, 3320 Velenje (SI); POGACAR, Toni, 3311 Sempeter (SI); SEMEJA, Uros, 3327 Smartno Ob Paki (SI)
(86) Internationale Anmeldenummer: PCT/EP2007/055878
(87) Internationale Veröffentlichungsnummer: WO 2008/000627

(56) Entgegenhaltungen:
- EP-A- 0 956 797
- DE-A1- 1 429 176
- US-A1- 2004 129 809

## Beschreibung

### Hintergrund der Erfindung

Die vorliegende Erfindung betrifft einen Küchengerätesatz, insbesondere für den Haushalt oder die Gastronomie, gemäß dem Oberbegriff des Anspruchs 1.

### Stand der Technik

Zur Verarbeitung von Lebensmitteln in der Küche sind aus dem Stand der Technik zahlreiche motorbetriebene Geräte bekannt, die aus einem Antriebsgerät, das den Motor enthält, und einem auswechselbaren Werkzeug, das vom Antriebsgerät angetrieben wird, bestehen. Bei den Antriebsgeräten unterscheidet man grundsätzlich zwischen Standgeräten und Handgeräten. Zu den Standgeräten gehören zum Beispiel Geräte vom Typ des Standmixers und Geräte vom Typ der Universalküchenmaschine. Bei den Handgeräten unterscheidet man unter anderem zwischen Geräten vom Typ des Handrührers (manchmal auch als Küchenmixer bezeichnet) und Geräten vom Typ des Stabmixers (manchmal auch als Pürierstab bezeichnet). An einen Handrührer können Werkzeuge paarweise, z.B. ein Paar Rührbesen oder ein Paar Knethaken, angebracht werden, die bei der Bearbeitung des Lebensmittels zusammenwirken. Das schließt nicht aus, dass an einen Handrührer auch Einzelwerkzeuge anbringbar sind, etwa an einen so genannten Mixansatz des Handrührers. Ein Stabmixer hingegen ist nur auf Einzelwerkzeuge ausgelegt und es ist keine Möglichkeit zum Anbringen von Werkzeugpaaren vorgesehen.

Aus der Schrift DE 60006695 T2 ist ein elektrisch betriebener Handrührer bekannt, der neben zwei an seiner Unterseite angeordneten Rühreransätzen für zwei Quirle außerdem an seinem hinteren Ende einen Mixansatz mit einem von außen zugänglichen Mitnehmer aufweist, der an der Motorwelle das Geräts angebracht ist und an den die Welle eines Mixstab angeschraubt werden kann.

Ein von Bosch unter der Bezeichnung MSM 6700 vertriebener Stabmixer umfasst ein lang gestrecktes Gehäuse, das einen Motor umschließt und an seinem Ende eine Kupplungseinrichtung zum Anbringen eines auswechselbaren Werkzeugs aufweist. Die Kupplungseinrichtung umfasst eine Öffnung im Gehäuse, in die eine Muffe des Stabmixeraufsatzes eingesetzt werden kann, und einen auf der Welle des Motors angeordneten Mitnehmer, der eine Welle des Werkzeugs rotierend antreiben kann. Auf dem Gehäuse des Stabmixers sind außerdem Bedienelemente zum Einschalten und zur Geschwindigkeitsregelung des Motors und zum Lösen eines eingesetzten Werkzeugs vorgesehen. Als Werkzeug können an den Stabmixer wahlweise ein Mixfuß, ein Schneebesen und ein Universalzerkleinerer angebracht werden. **Aus der** US 2004/0129809 A1 **ist ebenfalls ein modulares Küchensystem zum Verarbeiten von Nahrungsmitteln bekannt.**

### Der Erfindung zugrunde liegende Aufgabe

Jedes Antriebsgerät kann für eine Vielzahl unterschiedlicher Aufgaben eingesetzt werden. So kann ein Handrührer unter anderem zum Kneten von Teig, zum Anrühren von Soßen und zum Pürieren von Gemüse eingesetzt werden. Da jede Aufgabe ein anderes Werkzeug erfordert (Knethaken, Rührbesen, Mixfuß etc.), muss ein Hersteller für jedes seiner Antriebsgeräte ein mehr oder weniger großes Sortiment von Werkzeugen anbieten. Dies verursacht Herstellern die bei hoch differenzierten Sortimenten üblichen hohen Kosten für die Herstellung, Lagerhaltung und Distribution. Auch für einen Anwender entstehen hohe Kosten, da er für jedes Antriebsgerät einen eigenen Werkzeugsatz anschaffen muss.

### Erfindungsgemäße Lösung

Zur Lösung der Aufgabe lehrt die Erfindung einen Küchengerätesatz, insbesondere für den Haushalt oder die Gastronomie, mit den Merkmalen des Anspruchs 1.

Der vorliegenden Erfindung liegt die Einsicht zugrunde, dass verschiedene Typen von Antriebsgeräten trotz ihrer Unterschiede vielfach für ähnliche oder sogar identische Aufgaben herangezogen werden können und Hersteller deshalb häufig ähnliche Werkzeuge für verschiedene Antriebsgerätetypen anbieten. So gibt es etwa Knethaken sowohl für Handrührer als auch für Universalküchenmaschinen. Mixfüße werden als Werkzeug sowohl für Stabmixer als auch für Handrührer mit Mixansatz angeboten. Dadurch, dass das mindestens eine Systemwerkzeug an alle Systemantriebsgeräte des Küchengerätesatzes ankuppelbar ist, kann der Hersteller das gleiche Systemwerkzeug, z.B. den gleichen Mixfuß, für mehrere Antriebsgeräte, z.B. Stabmixer und Handrührer, anbieten und so sein Sortiment konsolidieren. Umgekehrt muss ein Anwender, der über mehrere unterschiedliche Systemantriebsgeräte verfügt, nur noch einen Systemwerkzeugsatz anschaffen, der mit allen Antriebsgeräten verwendbar ist.

### Bevorzugte Ausgestaltung der Erfindung

Vorteilhafte Aus- und Weiterbildungen, welche einzeln oder in Kombination miteinander eingesetzt werden können, sind Gegenstand der Unteransprüche.

In einer Ausführung der Erfindung umfassen die mindestens zwei Systemantriebsgeräte einen Stabmixer und einen Handrührer, vorzugsweise einen Handrührer mit Mixansatz. In einer Ausführung der Erfindung umfassen die mindestens zwei Systemantriebsgeräte ein Handgerät, vorzugsweise einen Handrührer, besonders vorzugsweise einen Handrührer mit Mixansatz, und ein Standgerät, vorzugsweise eine Universalküchenmaschine. In einer Ausführung der Erfindung umfassen die mindestens zwei Systemantriebsgeräte einen Stabmixer, einen Handrührer, vorzugsweise einen Handrührer mit Mixansatz, und eine Universalküchenmaschine.

Ein bevorzugter Stabmixer umfasst ein lang gestrecktes Gehäuse, das einen Motor umschließt und an seinem Ende eine Kupplungseinrichtung zum Anbringen eines auswechselbaren Werkzeugs aufweist. Auf dem Gehäuse des Stabmixers sind außerdem vorzugsweise Bedienelemente zum Einschalten und zur Geschwindigkeitsregelung des Motors und zum Lösen eines eingesetzten Werkzeugs vorgesehen. Im Zusammenhang dieser Beschreibung wird die Bezeichnung Stabmixer synonym mit der ebenfalls üblichen Bezeichnung Pürierstab verwendet.

Ein bevorzugter Handrührer weist ein Gehäuse auf, dessen oberer Bereich als Griff mit einer Durchgriffsöffnung ausgestaltet ist. Der untere Bereich des Handrührers umschließt einen Motor. Auf der Geräteunterseite sind zwei Kupplungseinrichtungen zur Aufnahme eines auswechselbaren Werkzeugpaars angeordnet. Auf dem Gehäuse im Bereich des Griffs sind vorzugsweise Bedienelemente zum Einschalten und zur Geschwindigkeitsregelung des Motors und zum Auswurf des Werkzeugpaars vorgesehen. Außerdem weist der bevorzugte Handrührer auf seiner Rückseite eine weitere, gewöhnlich als Mixansatz bezeichnete Kupplungseinrichtung für ein Werkzeug auf, mit dem der Handrührer alternativ zu dem Werkzeugpaar betrieben werden kann. Im Zusammenhang dieser Beschreibung wird die Bezeichnung Handrührer synonym mit der ebenfalls gebräuchlichen Bezeichnung Küchenmixer verwendet.

Ein bevorzugter Küchengerätesatz umfasst mehrere Systemwerkzeuge, besonders vorzugsweise für unterschiedliche Aufgaben. Das erlaubt es dem Anwender bei jedem Systemantriebsgerät aus mehreren Werkzeugen das für die anstehende Aufgabe am Besten geeignete auszuwählen. Das oder die Systemwerkzeuge sind vorzugsweise aus der Gruppe Mixfuß, Schneebesen, Universalzerkleinerer ausgewählt.

Ein bevorzugter Mixfuß, ist insbesondere zum Zerkleinern von Lebensmitteln geeignet. Er weist vorzugsweise eine rohrförmige Ummantelung auf, deren oberer Bereich mit einem Kupplungsabschnitt ausgestattet ist, um ihn an das Antriebsgerät anzukuppeln. Der untere Bereich der Ummantelung ist mit einer Glocke versehen, deren Spitze von einer längs in der Ummantelung angeordneten Welle durchsetzt ist. Innerhalb der Glocke ist die Welle an ihrem unteren Ende drehfest mit einem Messer versehen. In angekuppeltem Zustand kann das Messer über die Welle vom Motor des Antriebsgeräts in Rotation versetzt werden. Im Zusammenhang dieser Beschreibung wird die Bezeichnung Mixfuß synonym mit der ebenfalls üblichen Bezeichnung Mixstab verwendet.

Ein bevorzugter Schneebesen ist insbesondere zum Aufschäumen von Eiweiß oder Sahne geeignet oder zum Homogenisieren von Flüssigkeiten oder Flüssigkeitsgemischen. Er weist vorzugsweise eine Welle auf, deren oberes Ende von einer rohrförmigen Ummantelung umgeben ist. Die Ummantelung ist in ihrem oberen Bereich mit einem Kupplungsabschnitt ausgestattet, um den Schneebesen an das Antriebsgerät anzukuppeln. An ihrem unteren Ende trägt die Welle ein vorzugsweise im Wesentlichen birnenförmiges Drahtgeflecht. In angekuppeltem Zustand kann das Drahtgeflecht über die Welle vom Motor des Antriebsgeräts in Rotation versetzt werden. Im Zusammenhang dieser Beschreibung wird die Bezeichnung Schneebesen synonym mit den ebenfalls üblichen Bezeichnungen Schneerute und Schaumschläger verwendet.

Ein bevorzugter Universalzerkleinerer ist insbesondere zum zerkleinern von Fleisch, Käse, Obst, Gemüse, Nüssen oder Mandeln geeignet. Ein besonders bevorzugter Universalzerkleinerer ist auch zum Zerkleinern von Eis geeignet. Er weist vorzugsweise einen Becher auf, in den eine Welle eingesetzt werden kann, die an ihrem unteren Ende mit einem Messer ausgestattet ist. Außerdem umfasst der Universalzerkleinerer vorzugsweise einen Aufsatz, der auf den Becher aufgesetzt werden kann, um ihn zu verschließen, und dessen oberer Bereich mit einem Kupplungsabschnitt ausgestattet ist, um den Universalzerkleinerer an das Antriebsgerät anzukuppeln. In angekuppeltem Zustand kann das Messer über die Welle vom Motor des Antriebsgeräts in Rotation versetzt werden.

Ein bevorzugter Kupplungsabschnitt umfasst einen äußeren Ring, der z.B. am oberen Ende der Ummantelung eines Mixfußes oder eines Schneebesens oder auf der Mitte des Aufsatzes eines Universalzerkleinerers angeordnet ist. In der Mitte des Rings endet vorzugsweise die Welle des Werkzeugs. Die Welle ist in diesem Bereich vorzugsweise mit Flügeln ausgestattet, an die ein Mitnehmer des Antriebsgeräts angreifen kann.

Eine bevorzugte Kupplungseinrichtung umfasst eine Öffnung, in die ein äußerer Ring eines Kupplungsabschnitts passgenau eingreifen kann. In der Mitte der Kupplungseinrichtung befindet sich ein Mitnehmer, der in Funktionsverbindung mit dem Motor des Antriebsgeräts steht und an die Welle des Kupplungsabschnitts angreifen kann, um ihn rotierend anzutreiben. Ein Haltesystem, wie z.B. eines der in den europäischen Patentschriften EP 1138239 B1 und EP 0692215 B1 beschriebenen, sorgt vorzugsweise dafür, dass ein Kupplungsabschnitt lösbar an die Kupplungseinrichtung angekuppelt werden kann. Der diesbezügliche Inhalt der genannten Patentschriften ist durch Verweis Teil der vorliegenden Offenbarung.

Vorzugsweise ist mindestens ein, besonders vorzugsweise jedes Systemwerkzeug des Küchengerätesatzes mit mindestens einem Systemkupplungsabschnitt zum lösbaren Ankuppeln des Systemwerkzeugs an ein Systemantriebsgerät ausgestattet, sodass jeder Systemkupplungsabschnitt an jedes Systemwerkzeug ankuppelbar ist. Das kann die Konstruktion und Handhabung des Systemwerkzeugs vereinfachen, weil nicht für verschiedene Systemantriebsgeräte jeweils ein eigener Kupplungsabschnitt an dem Systemwerkzeug vorgesehen werden muss. Dennoch ist es auch in dieser Ausführung der Erfindung denkbar, dass ein Systemwerkzeug mehrere Kupplungsabschnitte aufweist. Von diesen müssen auch nicht alle Systemkupplungsabschnitte sein. Besonders vorzugsweise hat ein Systemwerkzeug jedoch genau einen Kupplungsabschnitt, der ein Systemkupplungsabschnitt ist. Dieser ist vorzugsweise an einem Ende des Systemwerkzeugs, zum Beispiel eines Mixfußes angeordnet, sodass das Systemwerkzeug bequem mit dem Systemkupplungsabschnitt in das Systemantriebsgerät eingesetzt werden kann.

Es ist grundsätzlich nicht notwendig, dass die Systemkupplungsabschnitte der Systemwerkzeuge untereinander identisch sind, solange sichergestellt ist, dass jeder Systemkupplungsabschnitt an jedes Systemantriebsgerät ankuppelbar ist. In einer bevorzugten Ausführung der Erfindung sind die Systemkupplungsabschnitte der Systemwerkzeuge jedoch untereinander identisch. Das kann unter anderem dazu beitragen die Konstruktion und die Produktion der Systemwerkzeuge zu vereinfachen.

Vorzugsweise ist mindestens ein, besonders vorzugsweise jedes Systemantriebsgerät mit mindestens einer Systemkupplungseinrichtung zum lösbaren Ankuppeln eines Systemwerkzeugs ausgestattet, sodass jedes Systemwerkzeug an jede Systemkupplungseinrichtung ankuppelbar ist. Das kann die Konstruktion und Handhabung des Systemantriebsgeräts vereinfachen, weil nicht für verschiedene Systemwerkzeuge jeweils eine eigene Kupplungseinrichtung an dem Systemantriebsgerät vorgesehen werden muss. Dennoch ist es auch in dieser Ausführung der Erfindung denkbar, dass das Systemantriebsgerät mehrere Kupplungseinrichtungen aufweist, von denen auch nicht alle Systemkupplungseinrichtungen sein müssen. Bei einem Systemantriebsgerät vom Typ eines Handrührers mit Mixansatz ist vorzugsweise nur der Mixansatz eine Systemkupplungseinrichtung.

Es ist grundsätzlich nicht notwendig, dass die Systemkupplungseinrichtungen der Systemantriebsgeräte untereinander identisch sind, solange sichergestellt ist, dass an jede Systemkupplungseinrichtung jedes Systemwerkzeug ankuppelbar ist. In einer bevorzugten Ausführung der Erfindung sind die Systemkupplungseinrichtungen der Systemantriebsgeräte jedoch untereinander identisch. Das kann unter anderem dazu beitragen die Konstruktion und Produktion der Systemantriebsgeräte zu vereinfachen.

In einer bevorzugten Ausführung der Erfindung ist jedes Systemwerkzeug mit mindestens einem Systemkupplungsabschnitt zum lösbaren Ankuppeln des Systemwerkzeugs an eine Systemkupplungseinrichtung ausgestattet und jedes Systemantriebsgerät mit mindestens einer Systemkupplungseinrichtung zum lösbaren Ankuppeln eines Systemkupplungsabschnitts ausgestattet, sodass jeder Systemkupplungsabschnitt an jede Systemkupplungseinrichtung ankuppelbar ist.

Es kann in einem Küchengerätesatz auch Werkzeuge geben, die nur mit bestimmten Systemantriebsgeräten sinnvoll und/oder sicher einsetzbar sind. So könnte z.B. ein einzelner Knethaken für einen Stabmixer ungeeignet sein. Deshalb umfasst der Küchengerätesatz in einer Ausführung außerdem mindestens ein Spezialwerkzeug, das an mindestens ein aber nicht an jedes Systemantriebsgerät des Küchengerätesatzes ankuppelbar ist. Das bedeutet, dass das Spezialwerkzeug keinen Systemkupplungsabschnitt aufweist. Das mindestens eine Spezialwerkzeug ist vorzugsweise ein Paar von Spezialwerkzeugen, z.B. ein Paar Knethaken oder ein Paar Rührbesen. Ein Systemantriebsgerät, an welches das Spezialwerkzeug ankuppelbar ist, muss mindestens eine Kupplungseinrichtung aufweisen, die an einen Kupplungsabschnitt das mindestens eine Spezialwerkzeug ankuppelbar ist. Vorzugsweise weist es zwei Kupplungseinrichtungen für ein Paar von Werkzeugen, z.B. ein Paar Knethaken oder ein Paar Rührbesen auf. Diese Kupplungseinrichtung - oder, wenn es mehrere Kupplungseinrichtungen sind, einer oder mehrere von diesen - können eine Systemkupplungseinrichtung sein, an die also neben den Spezialwerkzeugen auch Systemwerkzeuge ankuppelbar sind. In einer besonders bevorzugten Ausführung der Erfindung sind die Kupplungseinrichtungen für die Spezialwerkzeuge jedoch keine Systemkupplungseinrichtungen und das Systemantriebsgerät ist zusätzlich noch mit einer Systemkupplungseinrichtung ausgestattet.

Umgekehrt kann es in einem Küchengerätesatz auch Antriebsgeräte geben, die nur mit bestimmten Systemwerkzeugen sinnvoll und/oder sicher einsetzbar sind. Deshalb umfasst ein bevorzugter Küchengerätesatz außerdem mindestens ein Spezialantriebsgerät, an das mindestens ein, aber nicht jedes Systemwerkzeug des Küchengerätesatzes ankuppelbar ist. Das bedeutet, dass das Spezialantriebsgerät keine Systemkupplungseinrichtung aufweist. Das mindestens eine Spezialantriebsgerät ist vorzugsweise aus der Gruppe Stabmixer, Handrührer, Universalküchenmaschine ausgewählt. Ein Systemwerkzeug, das an das Spezialantriebsgerät ankuppelbar ist, muss mindestens einen Kupplungsabschnitt aufweisen, der an eine Kupplungseinrichtung des mindestens einen Spezialantriebsgeräts ankuppelbar ist. Dieser Kupplungsabschnitt ist vorzugsweise ein Systemkupplungsabschnitt, an den also neben dem Spezialantriebsgerät auch die Systemantriebsgeräte ankuppelbar sind.

Die vorliegende Erfindung vermeidet vorteilhaft, für jedes Antriebsgerät einen eigenen Werkzeugsatz vorhalten zu müssen.

### Kurzbeschreibung der Zeichnung

Die Erfindung wird im Folgenden anhand einer schematischen Zeichnung an einem Ausführungsbeispiel mit weiteren Einzelheiten näher erläutert.

Es zeigt:

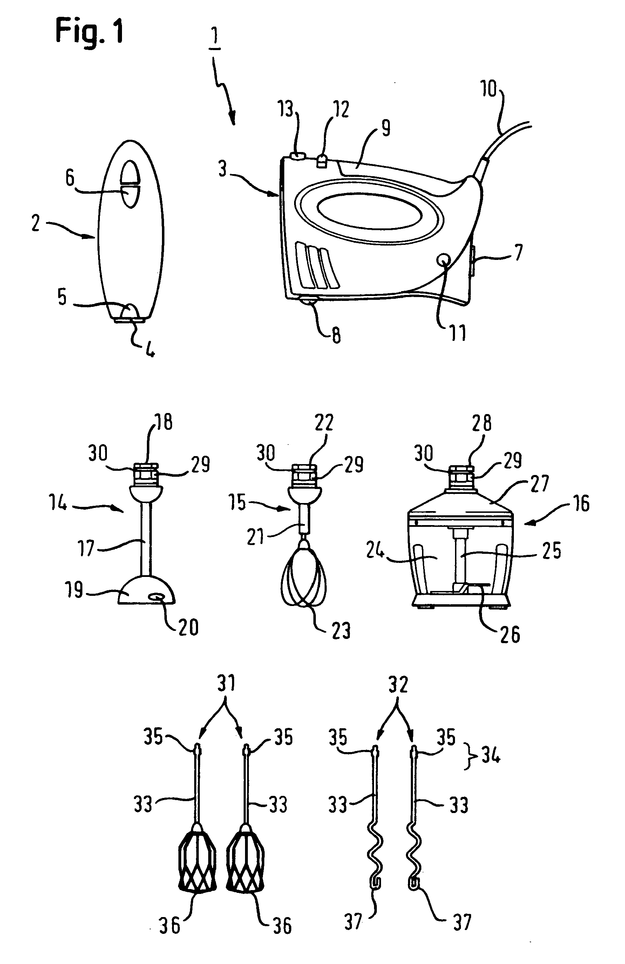

- Fig. 1:: Einen erfindungsgemäßen Küchengerätesatz mit zwei Systemantriebsgeräten, drei Systemwerkzeugen und zwei Paaren Spezialwerkzeuge.

### Ausführliche Beschreibung eines Ausführungsbeispiels

Der in der Fig. 1 dargestellte Küchengerätesatz 1 umfasst als Systemantriebsgeräte einen Stabmixer 2 und einen Handrührer 3. Der Stabmixer 2 weist an seinem unteren Ende eine Systemantriebseinrichtung 4 auf, an die jedes der später im Einzelnen beschriebenen Systemwerkzeuge 14, 15, 16 ankuppelbar ist. Durch Drücken zweier am unteren Rand des Stabmixers 2 auf der Vorder- und Rückseite angeordneter Entriegelungstasten 5 (nur die vordere Taste ist in der Figur sichtbar) können angekuppelte Systemwerkzeuge 14, 15, 16 gelöst werden, um sie abzunehmen. Der Stabmixer 2 enthält einen Motor zum Antrieb der Systemkupplungseinrichtung 4 und ggf. eine wiederaufladbare Batterie für den schnurlosen Betrieb. Im oberen Bereich des Gehäuses ist ein Tastenfeld mit zwei Drucktasten 6 zum Einschalten des Motors und Wählen der Geschwindigkeit angeordnet.

Der Handrührer 3 weist an seiner Rückseite eine Systemantriebseinrichtung 7 auf, an die alle später im Einzelnen beschriebenen Systemwerkzeuge 14, 15, 16 ankuppelbar sind. Außerdem weist er auf seiner Unterseite ein Paar Kupplungseinrichtungen 8 auf, die keine Systemkupplungseinrichtungen 7 sind, und an die Paare später beschriebener Spezialwerkzeuge 31, 32 ankuppelbar sind. Im oberen Bereich des Handrührers 3 ist ein Griff 9 ausgebildet, im unteren Teil des Handrührers 3 ist der Motor zum Antrieb der Systemkupplungseinrichtung 7 und der anderen Kupplungseinrichtungen 8 aufgenommen, der durch ein Netzkabel 10 mit Strom versorgt wird. Durch Drücken zweier im hinteren Bereich des Handrührers 3 auf beiden Seiten angeordneter Entriegelungstasten 11 (nur eine Taste ist in der Figur sichtbar) können angekuppelte Systemwerkzeuge 14, 15, 16 gelöst werden, um sie abzunehmen. Im vorderen Bereich des Griffs 9 ist ein Schalter 12 zum Einschalten des Handrührers 3 und zur Geschwindigkeitseinstellung und eine Auswurftaste 13 zum Auswerfen angekuppelter Spezialwerkzeuge 31, 32 aus den Kupplungseinrichtungen 8 auf der Unterseite des Handrührers 3 angeordnet.

Der Küchengerätesatz 1 umfasst als Systemwerkzeuge 14, 15, 16 einen Mixfuß 14, einen Schneebesen 15 und einen Universalzerkleinerer 16. Der Mixfuß 14 weist einen rohrförmigen Mantel 17 auf, dessen oberes Ende einen Systemkupplungsabschnitt 18 trägt, mit dem er an jedes der beiden Systemantriebsgeräte 2, 3 ankuppelbar ist. Am unteren Ende des Mantels 17 ist eine Glocke 19 angebracht, deren Schürze Austrittsöffnungen 20 aufweist (nur eine Austrittsöffnung ist in der Figur sichtbar). Durch den Mantel 17 verläuft eine Welle von der Systemkupplungseinrichtung 18 bis in die Glocke 19, wo sie ein Messer trägt. In angekuppeltem Zustand versetzt das Systemantriebsgerät 2, 3 die Welle und diese das Messer in Rotation.

Der Schneebesen 15 weist einen rohrförmigen Mantel 21 auf, dessen oberes Ende einen Systemkupplungsabschnitt 22 trägt, mit dem er an jedes der beiden Systemantriebsgeräte 2, 3 ankuppelbar ist. Vom Systemkupplungsabschnitt 22 aus verläuft durch den Mantel 21 eine Welle, die aus dem unteren Ende des Mantels 21 austritt und ein birnenförmiges Drahtgeflecht 23 trägt. In angekuppeltem Zustand versetzt das Systemantriebsgerät 2, 3 die Welle und diese das Drahtgeflecht 23 in Rotation.

Der Universalzerkleinerer 16 weist vorzugsweise einen Becher 24 auf, in den eine Welle 25 eingesetzt werden kann, die an ihrem unteren Ende ein Messer 26 trägt. Der Becher 24 wird durch einen Aufsatz 27 verschlossen, der von der Welle 25 durchsetzt ist und der einem Systemkupplungsabschnitt 28 trägt, mit dem er an jedes der beiden Systemantriebsgeräte 2, 3 ankuppelbar ist. In angekuppeltem Zustand versetzt das Systemantriebsgerät 2, 3 die Welle 25 und diese das Messer 26 in Rotation.

Die Systemkupplungsabschnitte 18, 22 und 28 der Systemwerkzeuge 14, 15, 16 sind identisch ausgebildet und umfassen jeweils einen äußeren Ring 29 mit dem Querschnitt eines Vielecks in dessen Mitte die Welle des Systemwerkzeugs 14, 15, 16 endet. Das Ende der Welle ist mit Flügeln ausgestattet, an die ein Mitnehmer der Systemkupplungseinrichtung 4, 7 angreifen kann. Der Ring 29 ist auf seiner Außenseite mit einer Kerbe 30 ausgestattet, in die ein Halteelement der Systemkupplungseinrichtung 4, 7 eingreifen kann. Die beiden Systemkupplungseinrichtungen 4, 7 sind ebenfalls identisch ausgebildet und bestehen jeweils aus einer zu den Ringen der Systemkupplungsabschnitte 18, 22 und 28 komplementären Öffnung. In der Mitte der Systemkupplungseinrichtung 4, 7 befindet sich ein Mitnehmer, der auf der Welle des Motors der Systemantriebseinrichtung 2, 3 aufsitzt und an die Welle des Systemwerkzeugs 14, 15, 16 angreift, um es in Rotation zu versetzen. Ein Halteelement, wie es beispielsweise in der europäischen Patentschrift EP 1138239 B1 beschrieben ist, greift in die Kerbe 30 ein.

Der Küchengerätesatz umfasst außerdem ein Paar Rührbesen 31 und ein paar Knethaken 32 als Spezialwerkzeuge, die nur an den Handrührer 3, und dort nur an die Kupplungseinrichtungen 8 ankuppelbar sind. Jedes Spezialwerkzeug 31, 32 umfasst eine Welle, deren oberes Ende mit einem Kupplungsabschnitt 34 zum Ankuppeln an die Kupplungseinrichtung 8 ausgestattet ist. Der Kupplungsabschnitt 34 weist Flügel 35 auf, in die ein Mitnehmer der Kupplungseinrichtungen 8 eingreifen kann. An ihrem unteren Ende trägt die Welle 33 im Fall des Rührbesens 31 ein fest mit ihr verbundenes Drahtgeflecht 36 oder im Fall des Knethakens 32 einen mehrfach gebogenen Knetabschnitt 37.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

Die vorliegende Erfindung vermeidet vorteilhaft, für jedes Antriebsgerät einen eigenen Werkzeugsatz vorhalten zu müssen.

## Patentansprüche

1. Küchengerätesatz (1), insbesondere für den Haushalt oder die Gastronomie, umfassend mindestens ein Systemwerkzeug (14, 15, 16) und mindestens zwei Systemantriebsgeräte (2, 3) unterschiedlichen Typs, wobei jedes Systemwerkzeug (14, 15, 16) an jedes Systemantriebsgerät (2, 3) lösbar ankuppelbar ist, um von ihm angetrieben zu werden
wobei jedes Systemantriebsgerät (2, 3) mit mindestens einer Systemkupplungseinrichtung (4, 7) zum lösbaren Ankuppeln mindestens eines Systemwerkzeugs (14, 15, 16) ausgestattet ist, sodass jedes Systemwerkzeug (14, 15, 16) an jede Systemkupplungseinrichtung (4, 7) ankuppelbar ist.
wobei jedes Systemwerkzeug (14, 15, 16) mit mindestens einem Systemkupplungsabschnitt (18, 22, 28) zum lösbaren Ankuppeln des Systemwerkzeugs (14, 15, 16) an ein Systemantriebsgerät (2, 3) ausgestattet ist, sodass jeder Systemkupplungsabschnitt (18, 22, 28) an jedes Systemwerkzeug (14, 15, 16) ankuppelbar ist, **dadurch gekennzeichnet, dass** die mindestens zwei Systemantriebsgeräte (2, 3) unterschiedlichen Typs einen Stabmixer (2) und einen Handrührer (3) umfassen, der eine Systemkupplungseinrichtung (7) und eine Kupplungseinrichtung (8) für Spezialwerkzeuge (31, 32) aufweist.

2. Küchengerätesatz (1) nach Anspruch 1, **dadurch gekennzeichnet, dass** er mehrere Systemwerkzeuge (14, 15, 16) umfasst.

3. Küchengerätesatz (1) nach einem der Ansprüche 1 oder 2, **dadurch gekennzeichnet, dass** das mindestens eine Systemwerkzeug (14, 15, 16) aus der Gruppe Mixfuß (14), Schneebesen (15), Universalzerkleinerer (16) ausgewählt sind.

4. Küchengerätesatz (1) nach Anspruch 3, **dadurch gekennzeichnet, dass** die Systemkupplungsabschnitte (18, 22, 28) der Systemwerkzeuge (14, 15, 16) untereinander identisch sind.

5. Küchengerätesatz (1) nach Anspruch 4, **dadurch gekennzeichnet, dass** die Systemkupplungseinrichtungen (4, 7) der Systemantriebsgeräte (2, 3) untereinander identisch sind.

6. Küchengerätesatz (1) nach einem der vorherigen Ansprüche, **dadurch gekennzeichnet, dass** er außerdem mindestens ein Spezialwerkzeug (31, 32) umfasst, das an mindestens ein aber nicht an jedes Systemantriebsgerät (2, 3) des Küchengerätesatzes (1) ankuppelbar ist.

7. Küchengerätesatz (1) nach einem der Ansprüche 1 bis 6, **dadurch gekennzeichnet, dass** er außerdem mindestens ein Spezialantriebsgerät umfasst, an das mindestens ein, aber nicht jedes Systemwerkzeug (14, 15, 16) des Küchengerätesatzes (1) ankuppelbar ist.

## Claims

1. Kitchen appliance set (1), particularly for the household or for gastronomy, comprising at least one system tool (14, 15, 16) and at least two system drive apparatus (2, 3) of different types, wherein each system tool (14, 15, 16) is detachably couplable to each system drive apparatus (2, 3) in order to be driven by it, wherein each system drive apparatus (2, 3) is equipped with at least one system coupling device (4, 7) for detachable coupling of at least one system tool (14, 15, 16) so that each system tool (14, 15, 16) is couplable to each system coupling device (4, 7) and wherein each system tool (14, 15, 16) is equipped with at least one system coupling section (18, 22, 28) for detachable coupling of the system tool (14, 15, 16) to a system drive apparatus (2, 3) so that each system coupling section (18, 22, 28) is couplable to each system tool (14, 15, 16), **characterised in that** the at least two system drive apparatus (2, 3) of different types comprise a hand blender (2) and a hand mixer (3), which has a system coupling device (7) and a coupling device (8) for special tools (31, 32).

2. Kitchen appliance set (1) according to claim 1, **characterised in that** it comprises a plurality of system tools (14, 15, 16).

3. Kitchen appliance set (1) according to one of claims 1 and 2, **characterised in that** the at least one system tool (14, 15, 16) is selected from the group of blender foot (14), balloon whisk (15) and universal chopper (16).

4. Kitchen appliance set (1) according to claim 3, **characterised in that** the system coupling sections (18, 22, 28) of the system tools (14, 15, 16) are identical with one another.

5. Kitchen appliance set (1) according to claim 4, **characterised in that** the system coupling devices (4, 7) of the system drive apparatus (2, 3) are identical with one another.

6. Kitchen appliance set (1) according to any one of the preceding claims, **characterised in that** it additionally comprises a special tool (31, 32) which is couplable to at least one, but not to each, system drive apparatus (2, 3) of the kitchen appliance set (1).

7. Kitchen appliance set (1) according to any one of claims 1 to 6, **characterised in that** it additionally comprises at least one special drive apparatus to which at least one, but not each, system tool (14, 15, 16) of the kitchen appliance set (1) is couplable.

## Revendications

1. Ensemble d'appareils culinaires (1), en particulier pour usage domestique ou la gastronomie, comprenant au moins un outil système (14, 15, 16) et au moins deux appareils d'entraînement système (2, 3) de type différent, chaque outil système (14, 15, 16) étant susceptible d'être accouplé de manière amovible à chaque appareil d'entraînement système (2, 3) afin d'être entraîné par celui-ci,
chaque appareil d'entraînement système (2, 3) étant équipé d'au moins un dispositif d'accouplement système (4, 7) destiné à accoupler de manière amovible au moins un outil système (14, 15, 16), permettant ainsi d'accoupler chaque outil système (14, 15, 16) à chaque dispositif d'accouplement système (4, 7),
chaque outil système (14, 15, 16) étant équipé d'au moins une partie d'accouplement système (18, 22, 28) destinée à accoupler de manière amovible l'outil système (14, 15, 16) à un appareil d'entrainement système (2, 3), permettant ainsi d'accoupler chaque partie d'accouplement système (18, 22, 28) à chaque outil système (14, 15, 16), **caractérisé en ce que** lesdits au moins deux appareils d'entraînement système (2, 3) de type différent comprennent un mixeur plongeant (2) et un batteur à main (3) lequel comporte un dispositif d'accouplement système (7) et un dispositif d'accouplement (8) pour outils spéciaux (31, 32).

2. Ensemble d'appareils culinaires (1) selon la revendication 1, **caractérisé en ce qu'**il comprend plusieurs outils système (14, 15, 16).

3. Ensemble d'appareils culinaires (1) selon l'une des revendications 1 ou 2, **caractérisé en ce que** ledit au moins un outil système (14, 15, 16) est choisi dans le groupe pied mixeur (14), fouet (15), hachoir universel (16).

4. Ensemble d'appareils culinaires (1) selon la revendication 3, **caractérisé en ce que** les parties d'accouplement système (18, 22, 28) des outils système (14, 15, 16) sont identiques entre elles.

5. Ensemble d'appareils culinaires (1) selon la revendication 4, **caractérisé en ce que** les dispositifs d'accouplement système (4, 7) des appareils d'entraînement système (2, 3) sont identiques entre eux.

6. Ensemble d'appareils culinaires (1) selon l'une des revendications précédentes, **caractérisé en ce qu'**il comprend en outre au moins un outil spécial (31, 32), susceptible d'être accouplé à au moins un, mais non pas à chaque appareil d'entraînement système (2, 3) de l'ensemble d'appareils culinaires (1).

7. Ensemble d'appareils culinaires (1) selon l'une des revendications 1 à 6, **caractérisé en ce qu'**il comprend en outre au moins un appareil d'entraînement spécial auquel peut être accouplé au moins un, mais non pas chaque outil système (14, 15, 16) de l'ensemble d'appareils culinaires (1).
